(19) Europäisches Patentamt
European Patent Office
Office européen des brevets

(11) **EP 1 017 979 B1**

(12) **EUROPÄISCHE PATENTSCHRIFT**

(45) Veröffentlichungstag und Bekanntmachung des Hinweises auf die Patenterteilung:
**02.05.2003 Patentblatt 2003/18**

(21) Anmeldenummer: **98946367.4**

(22) Anmeldetag: **18.08.1998**

(51) Int Cl.⁷: **G01M 15/00**

(86) Internationale Anmeldenummer:
**PCT/EP98/05228**

(87) Internationale Veröffentlichungsnummer:
**WO 99/015873 (01.04.1999 Gazette 1999/13)**

(54) **VERFAHREN ZUR BESTIMMUNG RELEVANTER GRÖSSEN, DIE DEN ZYLINDERDRUCK IN DEN ZYLINDERN EINER BRENNKRAFTMASCHINE REPRÄSENTIEREN**

PROCESS FOR DETERMINING RELEVANT VARIABLES WHICH REPRESENT THE CYLINDER PRESSURE IN THE CYLINDERS OF AN INTERNAL COMBUSTION ENGINE

PROCEDE POUR DETERMINER DES GRANDEURS IMPORTANTES REPRESENTANT LA PRESSION DANS LES CYLINDRES D'UN MOTEUR A COMBUSTION INTERNE

(84) Benannte Vertragsstaaten:
**DE FR GB IT**

(30) Priorität: **23.09.1997 DE 19741884**

(43) Veröffentlichungstag der Anmeldung:
**12.07.2000 Patentblatt 2000/28**

(73) Patentinhaber: **DaimlerChrysler AG 70567 Stuttgart (DE)**

(72) Erfinder:
• **GIMMLER, Helmut**
**D-71409 Schwaikheim (DE)**
• **GRUDEN, Igor**
**D-71229 Leonberg (DE)**
• **HOLDGREWE, Kai**
**D-71409 Schwaikheim (DE)**
• **NESTER, Ulrich**
**D-70329 Stuttgart (DE)**
• **PISCHINGER, Stefan**
**D-52076 Aachen (DE)**

(56) Entgegenhaltungen:
**DE-C- 19 529 708        US-A- 4 761 993**

• **M.B. MAHR ET AL.: "DU CAPTEUR DE VIBRATIONS AU DIAGRAMME DE PRESSION DE COMBUSTION" REVUE AUTOMOBILE., Bd. 85, Nr. 15, 5. April 1990, Seite 17 XP000133812 BERNE CH**
• **D. KÖNIG ET AL.: "APPLICATION OF CYCLOSTATIONARY AND TIME-FREQUENCY SIGNAL ANALYSIS TO CAR ENGINE DIAGNOSIS" PROCEEDINGS OF ICASSP '94, IEEE INTERNATIONAL CONFERENCE ON ACOUSTICS, SPEECH AND SIGNAL PROCESSING, Bd. 4, 19. - 22. April 1994, Seiten IV-149-IV-152, XP000530558 ADELAIDE (AU)**

EP 1 017 979 B1

**Beschreibung**

Die vorliegende Erfindung betrifft ein Verfahren zur Bestimmung relevanter Größen, die den Zylinderinnendruck in den Zylindern einer Brennkraftmaschine repräsentieren, wobei die relevanten Größen aus einer anderen gemessenen Größe abgeleitet werden nach dem Oberbegriff der Patentansprüche 1 und 2.

Aus der Offenlegungsschrift mit der Nummer DE 40 06 273 A1 ist es bereits bekannt, eine Übertragungsfunktion zu bestimmen zwischen einer der Größen Weg, Geschwindigkeit oder Beschleunigung, die an dem Motorblock erfasst werden und dem Zylinderinnendruck. Die entsprechende Größe Weg, Geschwindigkeit oder Beschleunigung wird dabei mittels eines Dehnungsmessstreifens oder einer Anordnung erfasst, die den Laser-Dopplereffekt nutzt. Die Übertragungsfunktion wird bestimmt, indem auf einem Prüfstand sowohl die entsprechende Größe als auch der Zylinderinnendruck erfasst wird. Die gemessenen Signale werden anschließend in den Frequenzbereich transformiert, in dem dann die Übertragungsfunktion gewonnen wird, indem zu den entsprechenden Signalen die Auto- und Kreuzkorrelierte gebildet wird. Nachdem an einem Prüfstand zu einem bestimmten Motorentyp die Übertragungsfunktion gewonnen wurde, wird im folgenden beim Einsatz der entsprechenden Motorentypen die so gewonnene Übertragungsfunktion verwendet, um aus dem gemessenen Signal den Zylinderinnendruck bestimmen zu können. Weiterhin wird der Kurbelwinkel bestimmt, um den Verlauf des Zylinderinnendrucks über dem Kurbelwinkel abbilden zu können. In dieser Offenlegungsschrift ist auch beschrieben, lediglich einen Teil des zeitlichen Verlaufs der entsprechenden Größe zu verwenden, wobei dieser Teil in Abhängigkeit von dem Kurbelwinkel bestimmt wird. Aus dieser Offenlegungsschrift ist es also bekannt, relevante Größen, die den Zylinderinnendruck bestimmen, aus gemessenen Körperschallsignalen abzuleiten.

Aus der DE 44 21 950 A1 ist ein Verfahren bekannt, bei dem zur Diagnose und Regelung eines Verbrennungsmotors verschiedene Eingangsgrößen angegeben worden sind. Eine dieser Eingangsgrößen kann beispielsweise der akustische Schall des Verbrennungsmotors sein, der durch ein Mikrofon erfasst und mittels eines neuronalen Netzwerkes ausgewertet werden soll.

Weiterhin ist ein Verfahren bekannt, wonach Drucksensoren in den Zylinderkopf eingebaut werden, mittels denen der zeitliche Verlauf des Zylinderdruckes erfasst wird. Mit diesem Verfahren ist der Zylinderdruck erfassbar. Dabei wirkt sich jedoch nachteilig aus, dass der Einbau des Sensors vergleichsweise aufwendig ist. Entsprechend der Zahl der Zylinder müssen bei einer Brennkraftmaschine mehrere Sensoren eingebaut werden. Ein solches Verfahren wurde daher bei dem eingangs genannten Stand der Technik lediglich am Prüfstand verwendet, um bei der größeren Stückzahl der eingesetzten Motoren eine einfachere Messgröße zur Diagnose bzw. Steuerung / Regelung verwenden zu können.

Aus der US-PS 5,093,792 ist es bekannt, Fehlerzustände wie beispielsweise Fehlzündungen, Klopfen (Selbstentzündung des Gemisches vor dem eigentlichen Zündzeitpunkt) zu erkennen. Diese Fehlerzustände sollen mittels eines neuronalen Netzwerkes erkannt werden, dessen Eingang der Zylinderinnendruck als Messgröße zugeführt werden soll.

Aus der US-PS 4,761,993 ist es bekannt, als den Körperschall einer Brennkraftmaschine zu messen. Es wird weiterhin bei einer Referenz-Brennkraftmaschine der Zylinderinnendruck gemessen und einer Kreuzkorrelation unterzogen mit Vibrationssignalen, die an verschiedenen Stellen der Brennkraftmaschine aufgenommen werden. Der Frequenzbereich, in dem diese Signale ausgewertet werden wird dabei mit bis zu 30.000 Hz angegeben. Um dabei definierte Lastbedingungen erzeugen zu können, wird das beschriebene Verfahren eingesetzt, um während einer Wartung des Fahrzeugs in einer Werkstatt eine Funktionsüberprüfung des Fahrzeugs vornehmen zu können.

Aus der Zeitschrift "Revue Automobil, Bd. 85, Nr. 15, 5. April 1990, Seite 17, Bern / CH" ist es bekannt, eine Kreuzkorrelation zwischen einem Vibrationssignal, das an einem Motor gemessen wird mit der Kurbelwinkelstellung vorzunehmen, um eine Aussage über den Zylinderinnendruck zu erhalten.

Aus der Veröffentlichung "Proceedings of ICASSP '94, IEEE International Conference on Acoustics, Speech and Signal Processing, Bd. 4 19.-22 April 1994, Seiten IV-149 bis IV-152, Adelaide / AU" ist ein Modell bekannt, aus gemessen Körperschallsignalen auf den Zylinderinnendruck zu schließen, indem anhand dieses Modells der Zylinderinnendruck aus den gemessenen Körperschallsignalen berechnet wird. Als Randbedingung für das Modell ist dabei eine konstante Drehzahl der Brennkraftmaschine vorgegeben.

Demgegenüber ist es die Aufgabe der Erfindung, ein Verfahren fiir eine im laufenden Betrieb einfach zu realisierende Erfassung des Zylinderdruckes bei Brennkraftmaschinen vorzuschlagen. Dieses Verfahren soll zudem möglichst flexibel verschiedenen Betriebsbedingungen gerecht werden.

Diese Aufgabe wird erfindungsgemäß mit einem Verfahren nach Anspruch 1 gelöst, wonach die gemessenen Körperschallsignale in den Zeit-Frequenzbereich transformiert werden derart, dass das gemessene Körperschallsignal hinsichtlich mehrerer einzelner Zeitabschnitte einer Transformation in den Frequenzbereich unterzogen wird, wobei die ermittelten Parameter dieser Transformationen einem neuronalen Netzwerk als Eingangssignal zugeführt werden, dessen Ausgangsgrößen die relevanten Größen sind.

Es hat sich dabei gezeigt, dass relevante Größen hinreichend genau bestimmbar sind durch die Verwendung des neuronalen Netzes aufgrund der vergleichsweise einfach messbaren Größe des Körperschalls. Durch die Verwendung eines neuronalen Netzes kann aus den gemessenen Signalen mit einer guten Genauigkeit auf die relevanten Größen geschlossen werden, weil die neuronalen Netze tolerant sind gegenüber verrauschten Eingangssignalen.

Das neuronale Netz kann dabei trainiert werden unter Verwendung von gemessenen Körperschallsignalen mit zugehörigen gemessenen Signalen, die die relevanten Größen repräsentieren, wobei anschließend an diese Lernphase die relevanten Größen aus dem gemessenen Körperschall unter Verwendung des trainierten neuronalen Netzes abgeleitet werden.

Durch die Transformation in den Zeit-Frequenzbereich wird der Tatsache Rechnung getragen, dass sich die Frequenzen des Körperschalls mit der Zeit ändern. Es wird die Frequenzanalyse der Signale also jeweils zeitabschnittsweise vorgenommen, um Unterschiede im Frequenzspektrum beispielsweise bei einer gerade erfolgten Zündung vom Frequenzspektrum am Ende des Arbeitstaktes unterscheiden zu können.

Erfindungsgemäß wird nach einer anderen Ausgestaltung nach Anspruch 2 einem neuronalen Netzwerk als Eingangsgröße eine Kombination der Signalleistung des gemessenen Körperschallsignals und einem Signal, in das der betragsmäßige Maximalwert des gemessenen Körperschallsignals eingeht, zugeführt, wobei im oberen Lastbereich die Signalleistung des gemessenen Körperschallsignals eine größere Gewichtung erhält als das Signal, in das der betragsmäßige Maximalwert des gemessenen Körperschallsignals eingeht, und im unteren Lastbereich das Signal, in das der betragsmäßige Maximalwert des gemessenen Körperschallsignals eingeht, eine größere Gewichtung erhält als die Signalleistung des gemessenen Körperschallsignals, wobei das Ausgangssignal des neuronalen Netzwerks die relevanten Größen sind.

Die Signalleistung ist eine vergleichsweise einfach zu ermittelnde Größe, die für sich schon gute Korrelationsergebnisse mit den relevanten Größen gezeigt hat. Der betragsmäßige Maximalwert des Körperschallsignals ist ebenfalls eine einfach ermittelbare Größe.

Bei den Verfahren nach Anspruch 2 erweist es sich als vorteilhaft, dass lediglich eine einzige Größe als Eingangssignal des neuronalen Netzes verwendet wird. Der Rechenaufwand wird sowohl in der Lernphase des neuronalen Netzes als auch in der nachfolgenden Auswertephase erheblich vermindert gegenüber einem Signal, das den Zeitverlauf des Körperschalls darstellt und mit einer entsprechend hinreichenden Zahl von Stützstellen verarbeitet werden muss.

Es hat sich gezeigt, dass durch diese Kombination der Eingangssignale eine besonders gute Korrelation der Eingangssignale mit den relevanten Größen erreichbar war, indem diese beiden Größen lastabhängig gewichtet gemittelt werden.

Bei dem Verfahren nach Anspruch 3 wird ein neuronales Netz verwendet, um die relevanten Größen aller Zylinder abzuleiten, die den jeweiligen Zylinderinnendruck repräsentieren.

In der Lernphase wird dadurch der Aufwand vergrößert, wobei während des laufenden Betriebes vorteilhaft nur ein neuronales Netz vorhanden sein muss.

Bei dem Verfahren nach Anspruch 4 wird je ein neuronales Netz verwendet, um die relevanten Größen abzuleiten, die den Zylinderinnendruck jeweils eines Zylinders repräsentieren.

Dabei wird der Aufwand in der Lernphase verringert, weil jedes der neuronalen Netze nur die Verhältnisse an einem Zylinder lernen muss.

Bei dem Verfahren nach Anspruch 5 wird als gemessenen Körperschallsignal das Körperschallsignal in dem Zeitbereich verwendet, der im zeitlichen Zusammenhang mit dem Öffnen des Auslassventils bzw. der Auslassventile des jeweiligen Zylinders liegt.

Es hat sich gezeigt, dass dieses gemessene Körperschallsignal ein für die jeweilige Last der Brennkraftmaschine charakteristisches Signal liefert.

Bei dem Verfahren nach Anspruch 6 wird als gemessenes Körperschallsignal das Körperschallsignal in dem Zeitbereich verwendet, der bei der Zündung des Gemisches des jeweiligen Zylinders in dem nachfolgenden Arbeitstakt der Brennkraftmaschine liegt.

Dabei wird der Körperschall mit seiner Ursache, das heißt der Verbrennung in der Brennkraftmaschine korreliert, so dass eine vergleichsweise gute Eindeutigkeit zwischen dem Körperschall und den relevanten Größen herstellbar ist.

Bei dem Verfahren nach Anspruch 7 wird als relevante Größe der mittlere indizierte Zylinderinnendruck verwendet.

Diese für eine Steuerung bzw. Regelung der Brennkraftmaschine gut verwendbare Größe hat bei Überprüfungen gelernter Gewichte des neuronalen Netzes eine gute Korrelation mit den Eingangssignalen gezeigt.

Bei dem Verfahren nach Anspruch 8 wird als relevante Größe der Maximalwert des Zylinderinnendrucks verwendet.

Bei dem Verfahren nach Anspruch 9 wird als relevante Größe die Änderung des Zylinderinnendrucks mit dem Kurbelwinkel verwendet.

Auch bei den Größen nach den Ansprüchen 8 und 9 besteht eine gute Korrelation mit den Eingangssignalen.

Bei dem Verfahren nach Anspruch 10 wird als relevante Größe der Verlauf des Zylinderinnendrucks in Abhängigkeit vom Kurbelwinkel verwendet.

Dieser Signalverlauf ist das aussagefähigste Ausgangssignal, wenngleich der Rechenaufwand größer ist als bei den anderen beschriebenen relevanten Größen.

Zur Ausführung der beschriebenen Verfahren kann der Körperschallsensor außen am Motorblock im Bereich der Brennkammer des jeweiligen Zylinders angebracht sein. Dadurch wird der Körperschall des Motorblockes in unmittelbarer Nähe an dem Ort gemessen, wo die Ursache für dessen Entstehen zu suchen ist. Außerdem sind dort störende Nebengeräusche wie beispielsweise von der Wasserpumpe, der Lichtmaschine, dem Kompressor der Klimaanlage, den Ventilen oder ähnlichem weniger ausgeprägt. Der Körperschallsensor kann auf der Einlassseite des Motorblockes angebracht werden. Dieser Anbringungsort hat den Vorteil, dass der Motorblock auf der Einlassseite weniger heiß ist als auf der Auslassseite, so dass der Sensor auf dieser Seite mittels eines Klebers einfacher zu befestigen ist. Wird der Körperschallsensor hingegen auf der Auslassseite des Motorblockes angebracht, ergeben sich insbesondere bei der Auswertung der Körperschallsignale bei geöffneten Auslassventilen Vorteile wegen der Nähe zu der zu detektierenden Ursache des Körperschalls. Weiterhin kann der Körperschallsensor gleichzeitig als Klopfsensor verwendet werden. Dadurch kann Aufwand hinsichtlich der Sensorik gespart werden, wenn der entsprechende Sensor fiir mehrere Anwendungszwecke ausgewertet wird. Ebenso können auch mehrere Körperschallsensoren vorhanden sein. Dadurch können dann die Signale gemittelt werden, wodurch sich besser auswertbare Signale ergeben.

Ein Ausführungsbeispiel der Erfindung ist in der Zeichnung näher dargestellt. Es zeigt dabei im einzelnen:

Fig. 1: eine Darstellung einer Vorgehensweise zum Verarbeiten von Lerndaten durch das neuronale Netz,

Fig. 2: eine Prinzipdarstellung geeigneter Sensorpositionen an einer Brennkraftmaschine,

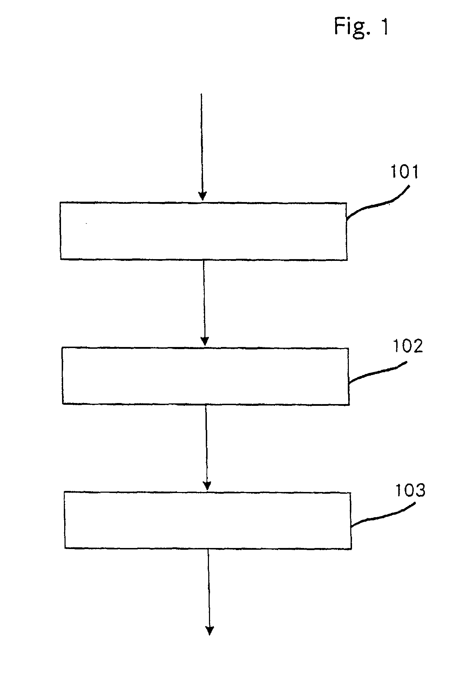

Figur 1 zeigt die Darstellung eines Blockschaltbildes, in dem das neuronale Netz zuerst in einem Schritt 101 mit Trainingsdaten trainiert wird.

In dem Schritt 102 wird eine Überprüfung mit Daten vorgenommen, um die Fehlergrenze des neuronalen Netzes zu überprüfen. Dieser Recall des Netzes wird vorzugsweise mit unbekannten Trainingsdaten durchgeführt. Dadurch kann vorteilhaft festgestellt werden, ob die Fehlergrenze erreicht ist. Der Fehler kann beispielsweise so definiert werden, daß die gemessene Ausgangsgröße mit der aufgrund des neuronalen Netzes verglichen wird, indem die Differenz dieser beiden Werte gebildet wird. Es kann beispielsweise eine Bewertung des Fehlers anhand der Summe der Fehlerquadrate vorgenommen werden.

In dem Schritt 103 wird das neuronale Netz verwendet, um aus aktuell gemessenen Eingangsgrößen die Ausgangsgrößen abzuleiten.

Im Rahmen einer Diagnose ist es auch denkbar, die Eingangssignale über mehrere Arbeitsspiele der Brennkraftmaschine zu mitteln.

Es hat sich dabei als vorteilhaft erwiesen, ein neuronales Netz vom feedforward-Typ zu verwenden. Bei diesem Netztyp wird der Aufwand der Verarbeitung der Daten in Grenzen gehalten, wobei dennoch eine gute Genauigkeit der Ausgangsergebnisse erreichbar ist.

Für das Training des neuronalen Netzes hat sich ein Backpropagation-Lernverfahren als zweckmäßig erwiesen, weil durch dieses überwachte Lernen der Fehler mit vertretbarem Verarbeitungsaufwand minimiert werden kann. Für die Bewertung der Fehler eignet sich beispielsweise ein Gradienten-Verfahren mit einem Momentum-Term oder die Levenberg-Marquardt-Optimierung.

Die Ausgangsgrößen stellen relevante Größen dar, die den Zylinderinnendruck einer Brennkraftmaschine repräsentieren. Die Eingangsgrößen sind Körperschallsignale.

Die Körperschallsensoren können im wesentlichen als piezoelektrische Elemente ausgebildet sein, die auf Druckunterschiede mit einer Änderung der Polarisationsspannung reagieren. Entsprechend dem anliegenden Druck ändert sich also die Ausgangsspannung des piezoelektrischen Elementes, wobei die piezoelektrischen Elemente Druckschwankungen mit einer sehr kurzen Zeitkonstanten, d.h. einer hohen zeitlichen Auflösung, wiedergeben.

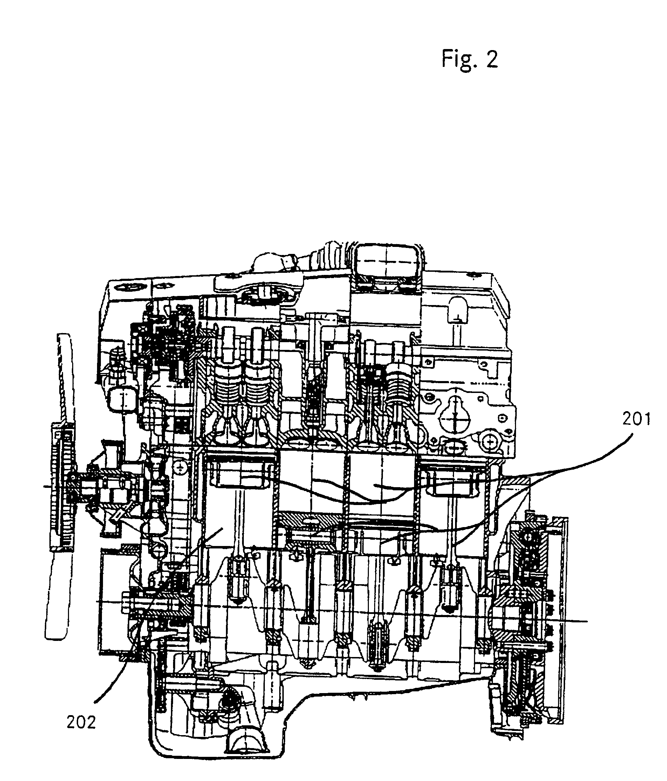

Figur 2 zeigt geeignete Positionen zur Anbringung der Körperschallsensoren 201 an dem Motorblock 202. Um die Verbrennungsgeräusche zu erfassen, hat es sich als zweckmäßig erwiesen, die Körperschallsensoren 201 im oberen Bereich des Motorblockes 202, d. h. im Bereich des Zylinderkopfes, anzubringen. Weiterhin sollte wegen der Störgeräusche ein Abstand eingehalten werden zu Nebenaggregaten wie beispielsweise der Wasserpumpe, der Lichtmaschine, dem Kompressor der Klimaanlage oder ähnlichem. Weiterhin ist zu beachten, daß Nockenwelle, Zündkerzen und ähnliches auch Störgeräusche beitragen. Um die Verbrennungsgeräusche mittels Körperschallsensoren 201 aufnehmen zu können, hat es sich als besonders zweckmäßig erwiesen, die Körperschallsensoren 201 auf der Auslaßseite des Motorblockes 202 anzubringen. Dort sind jedoch die Temperaturen höher als auf der Einlaßseite, was bei einer Verklebung nachteilig ist. Eine Lösung könnte beispielsweise darin bestehen, die Körperschallsensoren 201 zur Aufnahme der Trainingsdaten auf der Auslaßseite anzubringen und die Körperschallsensoren 201 für den laufenden Betrieb auf der Einlaßseite. Gegebenenfalls können aber auch Körperschallsensoren 201 auf derselben Seite des Motorblockes 202 für die Trainingsdaten und die Daten während des laufenden Betriebes verwendet werden.

Für die Signalauswertung hat es sich weiterhin als zweckmäßig erwiesen, die Signale der Körperschallsensoren einer Tiefpaßfilterung mit einer Eckfrequenz von etwa 1.000 Hz zu unterziehen. Besonders signifikante Ergebnisse waren im Frequenzbereich von 200 Hz bis 400 Hz zu erkennen. Durch diese Filterung kann beispielsweise das hochfrequente Störsignal der Zündkerze, das im Bereich von mehreren kHz liegt, herausgefiltert werden. Ein in Versuchen verwendeter Motor zeigte bei einer Drehzahl von etwa 2.000 Umdrehungen pro Minute eine Anregerfrequenz von etwa 17 Hz.

Weiterhin wird bei der Signalauswertung nicht das volle Signal über den zeitlichen Verlauf ausgewertet sondern nur der Anteil, der für die Auswertung relevant ist. Wenn beispielsweise die Auslaßgeräusche ausgewertet werden sollen, wird der Körperschall nur während dem Zeitintervall ausgewertet, zu dem die Ventile des jeweiligen Zylinders geöffnet sind. Sollen hingegen die Verbrennungsgeräusche ausgewertet werden, wird der Körperschall während dem Zeitintervall ausgewertet, das etwa mit der Zündung in dem jeweiligen Zylinder beginnt und beispielsweise mit dem Ende des Arbeitstaktes des jeweiligen Zylinders endet.

Es ist grundsätzlich möglich, mittels eines neuronalen Netzes die Druckverläufe mehrerer - insbesondere aller - Zylinder zu lernen oder aber je ein Netz zur Realisierung des Druckverlaufes jedes Zylinders zu verwenden. Die erste Möglichkeit hat sich als aufwendiger erwiesen, wobei jedoch die Zahl der benötigten Netze reduziert wird.

Es hat sich als zweckmäßig erwiesen, ein Feed-Forward-Netz mit Backpropagation-Lernverfahren zu verwenden. In der Lemphase wurde sowohl mit der Levenberg-Marquardt-Optimierung als auch mit dem Lernen mit Momentum und adaptiver Lemregel gearbeitet. Beim Lernen mit Momentum waren mehr Lernzyklen notwendig, um eine bestimmte Fehlergrenze zu unterschreiten. Das gefundene Minimum war oftmals nicht so gut wie das, das mit der Levenberg-Marquardt-Optimierung ermittelt wurde. Ein Teil des Zeitgewinns der Levenberg-Marquardt-Optimierung geht allerdings wieder verloren, weil pro Lemzyklus mehr Rechenzeit benötigt wird. Der Hauptnachteil der Levenberg-Marquardt-Optimierung besteht in dem erheblichen Speicherbedarf aufgrund der zunehmenden Zahl der zu speichernden Matrix-Elemente, abhängig von der Zahl der Eingabeneuronen, der Zahl der verdeckten Neuronen, der Ausgabeneuronen und der Trainingsmuster.

Für die Erstellung der Trainigsdaten wird der Zylinderinnendruck erfaßt. Für die Korrelation der gemessenen Körperschallsignale mit dem gemessenen Zylinderinnendruck gibt es die Möglichkeit, nach einer Korrelation des Körperschalles zu dem Zylinderinnendruck während des gesamten relevanten zeitlichen Verlaufes zu suchen oder eine Korrelation zu suchen zwischen den Körperschallsignalen und charakteristischen Größen des Zylinderinnendruckes, die unmittelbar für eine Steuerung bzw. Regelung des Motors verwendet werden können oder aus denen solche Größen ohne weiteres einfach ableitbar sind. Diese Größen können beispielsweise der mittlere indizierte Druck $p_{mi}$ sein, der aus der Verbrennung und der daraus auf den Kolben geleisteten Arbeit bestimmt wird. Weiterhin kann diese Größe in dem maximalen Anstieg des Zylinderinnendruckes bezogen auf den Kurbelwinkel $(dp/d\alpha)_{max}$ bestehen oder dem kurbelwinkelabhängigen Ort des maximalen Druckes bzw des maximalen Anstieges des Zylinderinnendruckes bezogen auf den Kurbelwinkel

Es hat sich gezeigt, daß der maximale Druck und dessen kurbelwinkelabhängiger Ort sich wegen Problemen bei der Erkennung im niederen Lastbereich nur bedingt als Ausgangsgrößen eignen.

Hingegen hat sich gezeigt, daß das Auslaßgeräusch eine Korrelation mit dem Verbrennungsvorgang aufweist. In dem durchgeführten Versuch wurde eine Zeit-Fourier-Transformation durchgeführt. Das bedeutet, daß das gemessene Signal in bestimmten Zeitintervallen hinsichtlich des Frequenzspektrums zerlegt wurde. Vorteilhaft kann aus dem Körperschallsignal eine der folgenden charakteristischen Größen abgeleitet werden:

Die Signalleistung P:

$$P = \int (\sqrt{(\text{Körperschallsignal})^2})$$

kann beispielsweise in einem bestimmten Zeitintervall ermittelt werden, das dem Auslaßgeräusch der Verbrennung in der Nähe des Öffnens der Auslaßventile des jeweiligen Zylinders zugeordnet ist.

Die maximale Amplitude:

$$\text{Amplitude} = \max |(\text{Körperschallsignal})|$$

entspricht dem betragsmäßigen Maximalwert des Körperschallsignales in dem entsprechenden Zeitintervall.

Durch Verwendung dieser Größen läßt sich vorteilhaft die Datenmenge sowohl in der Lemphase als auch in der nachfolgenden Auswertephase reduzieren, weil pro Arbeitstakt jedes Zylinders nur eine Größe zu verarbeiten ist.

Es zeigte sich eine Korrelation zwischen dem Körperschall des Auslaßgeräusches, d.h. den beiden genannten Größen und den charakteristischen Größen der Verbrennung (mittlerer indizierter Druck, maximaler Druck, maximaler Druckanstieg) insbesondere im oberen Lastbereich. Im unteren Lastbereich war nicht immer eine eindeutige Zuordnung möglich, was beim Lernen des neuronalen Netzes zu Problemen mit der Reproduzierbarkeit der Ergebnisse führen kann. Ebenso hat es sich in einigen Fällen als zweckmäßig erwiesen, einen geschleppten Betrieb des Motors von einem gefeuerten Betrieb des Motors zu unterscheiden, da in diesen beiden Betriebszuständen unterschiedliche Drosselklappenstellungen und unterschiedliche Lastzustände zu vergleichbaren Auslaßgeräuschen führen können. Durch diese Unterscheidung der Betriebszustände kann wiederum eine Eindeutigkeit hergestellt werden.

Als weitere Eingangsgröße wurde der betragsmäßige Maximalwert des Körperschallsignales im Arbeitstakt des Zylinders gewählt. Anstelle des betragsmäßigen Maximalwertes des Körperschallsignales kann als Eingangsgröße beispielsweise auch die Summe des betragsmäßigen Maximalwertes und des betragsmäßigen Minimalwertes genommen werden. Ebenso kann auch als signifikanterer Teil des Arbeitstaktes die Auswertung der Signale nur während der ersten Hälfte des Arbeitstaktes erfolgen, um Aufwand bei der Verarbeitung der Daten zu sparen.

Als Ausgangsgrößen werden wiederum die bereits beschriebenen charakteristischen Größen verwendet.

Dieses Kriterium zeigt eine Korrelation im unteren Lastbereich, und eine schlechtere Eindeutigkeit im oberen Lastbereich. Ebenso hat es sich auch hier in einigen Fällen als zweckmäßig erwiesen, einen geschleppten Betrieb des Motors von einem gefeuerten Betrieb des Motors zu unterscheiden, da in diesen beiden Betriebszuständen unterschiedliche Drosselklappenstellungen und unterschiedliche Lastzustände zu vergleichbaren Geräuschen führen können. Durch diese Unterscheidung der Betriebszustände kann wiederum eine Eindeutigkeit hergestellt werden.

Der geschleppte Betrieb kann beispielsweise von dem gefeuerten Betrieb unterschieden werden durch Verwendung eines oder mehrerer Dehnungsmeßstreifen, wodurch eine Torsion des Antriebsstranges erfaßt werden kann. Dieses Signal kann beispielsweise als zusätzliches Eingangssignal für das neuronale Netz verwendet werden oder es können unterschiedliche Netze verwendet werden für den gefeuerten und den geschleppten Betrieb. Es ist auch denkbar, beispielsweise nur die Daten zu verwenden, die einem gefeuerten Betrieb des Motors entsprechen.

Es haben sich insgesamt gute Ergebnisse gezeigt, wenn die beiden Kriterien gewichtet kombiniert werden. Das bedeutet, daß das erstgenannte Kriterium im oberen Lastbereich stärker gewichtet wird und das zweite Kriterium im unteren Lastbereich.

Für diese Eingangsgrößen haben sich neuronale Netze der Topologie mit einer verdeckten Schicht und etwa 5 bis 10 Neuronen in der verdeckten Schicht als geeignet erwiesen.

Gegebenenfalls können als Körperschallsignal auch die Signale mehrerer Körperschallsensoren kombiniert werden.

Es ist auch möglich, den Zeitverlauf des Zylinderdruckes vollständig zu rekonstruieren. Als Eingangsgröße hat sich dabei das Körperschallsignal als geeignet erwiesen, das mittels eines Bandpaßfilters auf einen Frequenzbereich von 200 Hz bis 900 Hz, insbesondere 400 Hz bis 600 Hz gefiltert wurde. Um die Datenmenge weiter zu begrenzen, wurde das Körperschallsignal nur während des Zeitpunktes von ca. 20° Kurbelwinkel vor dem Zündzeitpunkt bis etwa 40° Kurbelwinkel nach dem Zündzeitpunkt ausgewertet. Es zeigten sich hier lastabhängig deutliche Schwankungen im Signalverlauf, die eine Eindeutigkeit der Zuordnung möglich machen.

Für die vollständige Rekonstruktion des Verlaufes des Zylinderdruckes wurde ein Netz mit einer Topologie von einer verdeckten Schicht mit 50 Neuronen in der verdeckten Schicht verwendet.

## Patentansprüche

1. Verfahren zur Bestimmung relevanter Größen im laufenden Fahrbetrieb, die den Zylinderinnendruck in den Zylindern einer Brennkraftmaschine repräsentieren, wobei die relevanten Größen aus dem gemessenen Körperschall der Brennkraftmaschine abgeleitet werden (103),
   **dadurch gekennzeichnet, dass** die gemessenen Körperschallsignale in den Zeit-Frequenzbereich transformiert werden (101, 103) derart, dass das gemessene Körperschallsignal hinsichtlich mehrerer einzelner Zeitabschnitte einer Transformation in den Frequenzbereich unterzogen wird, wobei die ermittelten Parameter dieser Transformationen einem neuronalen Netzwerk als Eingangssignal zugeführt werden, dessen Ausgangsgrößen die relevanten Größen sind.

2. Verfahren zur Bestimmung relevanter Größen im laufenden Fahrbetrieb, die den Zylinderinnendruck in den Zylindern einer Brennkraftmaschine repräsentieren, wobei die relevanten Größen aus dem gemessenen Körperschall der Brennkraftmaschine abgeleitet werden (103),
   **dadurch gekennzeichnet, dass** einem neuronalen Netzwerk als Eingangsgröße eine Kombination der Signalleistung des gemessenen Körperschallsignals und einem Signal, in das der betragsmäßige Maximalwert des gemessenen Körperschallsignals eingeht, zugeführt wird, wobei im oberen Lastbereich die Signalleistung des gemessenen Körperschallsignals eine größere Gewichtung erhält als das Signal, in das der betragsmäßige Maximalwert des gemessenen Körperschallsignals eingeht, und im unteren Lastbereich das Signal, in das der betragsmäßige Maximalwert des gemessenen Körperschallsignals eingeht, eine größere Gewichtung erhält als die Signalleistung des gemessenen Körperschallsignals und dass das Ausgangssignal des neuronalen Netzwerks die relevanten Größen sind.

3. Verfahren nach Anspruch 1 oder 2,
   **dadurch gekennzeichnet, dass** ein neuronales Netz verwendet wird, um die relevanten Größen aller Zylinder abzuleiten, die den jeweiligen Zylinderinnendruck repräsentieren.

4. Verfahren nach Anspruch 1 oder 2,
   **dadurch gekennzeichnet, dass** je ein neuronales Netz verwendet wird, um die relevanten Größen abzuleiten, die den Zylinderinnendruck jeweils eines Zylinders repräsentieren.

**5.** Verfahren nach einem der Ansprüche 1 bis 4, **dadurch gekennzeichnet, dass** als gemessenes Körperschallsignal das Körperschallsignal in dem Zeitbereich verwendet wird, der im zeitlichen Zusammenhang mit dem Öffnen des Auslassventils bzw. der Auslassventile des jeweiligen Zylinders liegt.

**6.** Verfahren nach einem der Ansprüche 1 bis 5, **dadurch gekennzeichnet, dass** als gemessenes Körperschallsignal das Körperschallsignal in dem Zeitbereich verwendet wird, der bei der Zündung des Gemisches des jeweiligen Zylinders in dem nachfolgenden Arbeitstakt der Brennkraftmaschine liegt.

**7.** Verfahren nach einem der Ansprüche 1 bis 6, **dadurch gekennzeichnet, dass** als relevante Größe der mittlere indizierte Zylinderinnendruck verwendet wird.

**8.** Verfahren nach einem der Ansprüche 1 bis 7, **dadurch gekennzeichnet, dass** als relevante Größe der Maximalwert des Zylinderinnendrucks verwendet wird.

**9.** Verfahren nach einem der Ansprüche 1 bis 8, **dadurch gekennzeichnet, dass** als relevante Größe die Änderung des Zylinderinnendrucks mit dem Kurbelwinkel verwendet wird.

**10.** Verfahren nach einem der Ansprüche 1 bis 9, **dadurch gekennzeichnet, dass** als relevante Größe der Verlauf des Zylinderinnendrucks in Abhängigkeit vom Kurbelwinkel verwendet wird.

**Claims**

**1.** Method of determining relevant values in running operation which represent the cylinder inner pressure in the cylinders of an internal combustion engine wherein the relevant values are derived from the measured structure-borne noise of the internal combustion engine (103), **characterised in that** the measured structure-borne noise signals are transformed into the time-frequency zone (101, 103) in such a way that the measured structure-borne noise signal in relation to several individual sections of time is subjected to a transformation into the frequency zone wherein the ascertained parameters of these transformations are fed as an input signal to a neuronal network, of which the output signals are the relevant values.

**2.** Method of determining relevant values in running operation which represent the cylinder inner pressure in the cylinders of an internal combustion engine wherein the relevant values are derived from the measured structure-borne noise of the internal combustion engine (103), **characterised in that** as an input signal a combination of the signal power of the measured structure-borne noise signal and a signal, into which the maximum value figure of the measured structure-borne noise signal goes, are fed to a neuronal network wherein in the upper load area the signal power of the measured structure-borne noise signal receives a greater weighting than the signal, into which the maximum value figure of the measured structure-borne noise signal goes, and in the lower load area the signal, into which the maximum value figure of the measured structure-borne noise signal goes, receives a greater weighting than the signal power of the measured structure-borne noise signal and that the output signal of the neuronal network are the relevant values.

**3.** Method according to claim 1 or 2 **characterised in that** a neuronal network is used in order to derive the relevant values of all cylinders which represent the respective cylinder inner pressure.

**4.** Method according to claim 1 or 2 **characterised in that** a respective neuronal network is used in order to derive the relevant values which represent the cylinder inner pressure of a respective cylinder.

**5.** Method according to one of the claims 1 to 4 **characterised in that** as a measured structure-borne noise signal the structure-borne noise signal is used in the section of time which lies in temporal connection with the opening of the outlet valve or the outlet valves of the respective cylinder.

**6.** Method according to one of the claims 1 to 5 **characterised in that** as a measured structure-borne noise signal the structure-borne noise signal is used in the section of time which upon ignition of the mixture of the respective cylinder lies in the subsequent work stroke of the internal combustion engine.

**7.** Method according to one of the claims 1 to 6 **characterised in that** the average indexed cylinder inner pressure is used as a relevant value.

**8.** Method according to one of the claims 1 to 7 **characterised in that** the maximum value of the cylinder inner pressure is used as a relevant value.

**9.** Method according to one of the claims 1 to 8 **characterised in that** the change of the cylinder inner pressure with the crank angle is used as a relevant value.

**10.** Method according to one of the claims 1 to 9 **characterised in that** the course of the cylinder inner pressure depending upon the crank angle is used as a relevant value.

## Revendications

**1.** Procédé pour déterminer des grandeurs pertinentes pendant le fonctionnement permanent, qui représentent la pression dans les cylindres d'un moteur à combustion interne, les grandeurs pertinentes étant déduites (103) du bruit de structure mesuré du moteur à combustion interne, **caractérisé en ce que** les signaux de bruit de structure mesurés sont transformés (101, 103) dans la plage de fréquence temporelle, de telle sorte que le signal de bruit de structure est soumis à une transformation dans la plage de fréquence à l'égard de plusieurs périodes temporelles individuelles, les paramètres déterminés de ces transformations étant amenés à titre de signal d'entrée à un réseau neuronal dont les grandeurs de sortie sont les grandeurs pertinentes.

**2.** Procédé pour déterminer des grandeurs pertinentes pendant le fonctionnement permanent, qui représentent la pression dans les cylindres d'un moteur à combustion interne, les grandeurs pertinentes étant déduites (103) du bruit de structure mesuré du moteur à combustion interne, **caractérisé en ce que** l'on amène à un réseau neuronal, à titre de grandeur d'entrée, une combinaison de la puissance du signal de bruit de structure mesuré et d'un signal dans lequel rentre la valeur maximale du signal de bruit de structure mesuré, et dans la plage de charge supérieure la puissance du signal de bruit de structure mesuré reçoit une pondération supérieure à celle du signal dans lequel rentre la valeur maximale du signal de bruit de structure mesuré, et dans la plage de charge inférieure le signal dans lequel rentre la valeur maximale du signal de bruit de structure mesuré reçoit une pondération supérieure à celle de la puissance du signal de bruit de structure mesuré, et **en ce que** le signal de sortie du réseau neuronal est la grandeur pertinente.

**3.** Procédé selon l'une ou l'autre des revendications 1 et 2, **caractérisé en ce que** l'on utilise un réseau neuronal pour déduire les grandeurs pertinentes de tous les cylindres, qui représentent la pression intérieure respective des cylindres.

**4.** Procédé selon l'une ou l'autre des revendications 1 et 2, **caractérisé en ce que** l'on utilise un réseau neuronal respectif pour déduire les grandeurs pertinentes qui représentent la pression intérieure respective d'un cylindre.

**5.** Procédé selon l'une des revendications 1 à 4, **caractérisé en ce que** l'on utilise à titre de signal de bruit de structure mesuré le signal de bruit de structure dans la période temporelle qui est en relation temporelle avec l'ouverture de la soupape d'échappement ou des soupapes d'échappement du cylindre respectif.

**6.** Procédé selon l'une des revendications 1 à 5, **caractérisé en ce que** l'on utilise à titre de signal de bruit de structure mesuré le signal de bruit de structure dans la période temporelle qui se situe, lors de l'allumage du mélange du cylindre respectif, dans le cycle de travail suivant du moteur à combustion interne.

**7.** Procédé selon l'une des revendications 1 à 6, **caractérisé en ce que** l'on utilise à titre de grandeur pertinente la pression intérieure moyenne indexée du cylindre.

**8.** Procédé selon l'une des revendications 1 à 7, **caractérisé en ce que** l'on utilise à titre de grandeur pertinente la valeur maximale de la pression intérieure du cylindre.

**9.** Procédé selon l'une des revendications 1 à 8, **caractérisé en ce que** l'on utilise à titre de grandeur pertinente la modification de la pression intérieure du cylindre avec l'angle du vilebrequin.

**10.** Procédé selon l'une des revendications 1 à 9, **caractérisé en ce que** l'on utilise à titre de grandeur pertinente l'évolution de la pression intérieure du cylindre en dépendance de l'angle du vilebrequin.

Fig. 1

101

102

103

Fig. 2

201

202